(19) **Europäisches Patentamt**

**European Patent Office**

**Office européen des brevets**

(11) Veröffentlichungsnummer: **0 098 449
B1**

(12) ## EUROPÄISCHE PATENTSCHRIFT

(45) Veröffentlichungstag der Patentschrift:
**18.01.89**

(51) Int. Cl.⁴: **G 05 D 23/19**

(21) Anmeldenummer: **83106027.2**

(22) Anmeldetag: **21.06.83**

(54) **Steuerung für eine Heizungsanlage.**

(30) Priorität: **02.07.82 DE 8219356 U**

(43) Veröffentlichungstag der Anmeldung:
**18.01.84 Patentblatt 84/3**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-A- 2 630 920
DE-A- 2 846 753
FR-A- 2 354 014
FR-A- 2 444 900**

(73) Patentinhaber: **Joh. Vaillant GmbH u. Co., Berghauser
Strasse 40 Postfach 10 10 20, D-5630 Remscheid 1 (DE)**

(72) Erfinder: **Taag, Jürgen, Joachimstrasse 40,
D-5630 Remscheid (DE)**

(74) Vertreter: **Helm, Johann-Ludwig, c/o Joh. Vaillant GmbH
u. Co Postfach 10 10 20 Berghauser Strasse 40,
D-5630 Remscheid 1 (DE)**

**Beschreibung**

Die vorliegende Erfindung bezieht sich auf eine Steuerung für eine Heizungsanlage gemäss dem Oberbegriff des Patentanspruchs.

Bei Heizungen gemäss dem Stand der Technik, sei es mit direkter Speisung der Heizungsanlage über eine brennstoffbeheizte Wärmequelle oder über eine indirekte Speisung – beispielsweise über einen Mischer –, wird die Wärmequelle und die Pumpe dann abgeschaltet, wenn der Ist-Wert der Raumtemperatur aufgrund einer Beheizung eines Raums durch die Heizungsanlage gleich der Raumsolltemperatur ist. Beheizt eine solche Heizungsanlage mehrere Räume, ist eine Beherrschen der Heizungsanlage schwierig, weil von einem Testraum ausgegangen werden muss.

So ist beispielsweise durch die DE-A1-2846753 ein Verfahren zum Ein- und Ausschalten einer Umwälzpumpe einer Heizungsanlage bekanntgeworden, wobei eine Umwälzpumpe in einem Erhitzerkreis der Heizungsanlage angeordnet ist, die über einen Vier-Wege-Mischer an einen Kessel angeschlossen ist. Hierbei wird in Abhängigkeit eines Vergleichs des Sollwertes der Raumtemperatur und der zugeordneten Heizungsvorlauftemperatur die Umwälzpumpe ein- oder ausgeschaltet. Die Umwälzpumpe bleibt ausgeschaltet, solange der Sollwert der Heizungsvorlauftemperatur gleich oder kleiner ist als der Sollwert der Raumtemperatur. Dieses Verfahren hat den Nachteil, dass ein Abschalten der Pumpe im Heizungskreis einen weiteren Betrieb des Kessels im Erhitzerkreis zur Folge hat, wodurch als weitere Folge sich sehr hohe Stillstandsverluste ergeben. Weiterhin haftet der Anlage der Nachteil an, dass die Einschalttemperaturen für das Wiederinbetriebsetzen der Pumpe abhängig sind von der Steilheit der Heizkurve, das heisst, je flacher die Heizkurve gehalten ist, um so grösser ist das Schwingverhalten der Anlage, wenn im Bereich hoher Aussentemperaturen die Heizanlage für Teile von Tagen in Betrieb geht und für die entsprechend anderen Teile der Tage ausser Betrieb ist.

Der vorliegenden Erfindung liegt die Aufgabe zugrunde, den Wiedereinschaltpunkt der Heizungsanlage ausschliesslich in Abhängigkeit der Aussentemperatur von der Raumtemperatur festzulegen, so dass die von der Heizungsanlage beheizten Räume in ihrer Raumtemperatur nicht allzuviel unter den Aussentemperaturwert absinken können. Dieses Wiedereinschalten soll unabhängig von der Steilheit der eingestellten Heizkurve erfolgen.

Die Lösung dieser Ausgabe liegt in den kennzeichnenden Merkmalen des Hauptanspruchs.

Weitere Ausgestaltungen und besonders vorteilhafte Weiterbildungen der Erfindung gehen aus der nachfolgenden Beschreibung hervor, die ein Ausführungsbeispiel der Erfindung anhand der Figuren eins und zwei der Zeichnungen näher erläutern.

Es bedeuten:

Figur eins ein Blockschaltbild der erfindungsgemässen Steuerung und

Figur zwei ein Diagramm.

In beiden Figuren bedeuten gleiche Bezugszeichen jeweils die gleichen Einzelheiten.

Die Steuerung der Heizungsanlage weist einen Aussentemperatur-Messfühler 1 auf, der über eine Messleitung 2 mit einem Messwertumwandler 3 verbunden ist. Am Ausgang 4 des Messwertumwandlers steht eine der Aussentemperatur direkt proportionale Spannung $U_{AT}$, die über eine Leitung 5 auf einen Eingang 6 eines Komparators 7 geführt ist, dessen Ausgang 8 sich bei 9 verzweigt und über eine Leitung 10 mit einem Relais 11 verbunden ist, das einen nicht weiter dargestellten Elektromotor einer Heizungsumwälzpumpe beherrscht. Von dem Verzweigungspunkt 9 zweigt eine Leitung 31 ab, die zu einem Brennerrelais 12 führt, das ein Magnetventil für einen Gas- oder Ölbrenner einer nicht weiter dargestellten Wärmequelle beherrscht.

An einem Sollwertgeber 13 kann über eine Handhabe 14 ein Raumtemperatur-Sollwert eingestellt werden, der über eine Messleitung 15 einem weiteren Messwertumwandler 16 zugeführt ist, dessen Ausgang 17 über eine Leitung 18 auf einen weiteren Eingang 19 des Komparators 7 geführt ist.

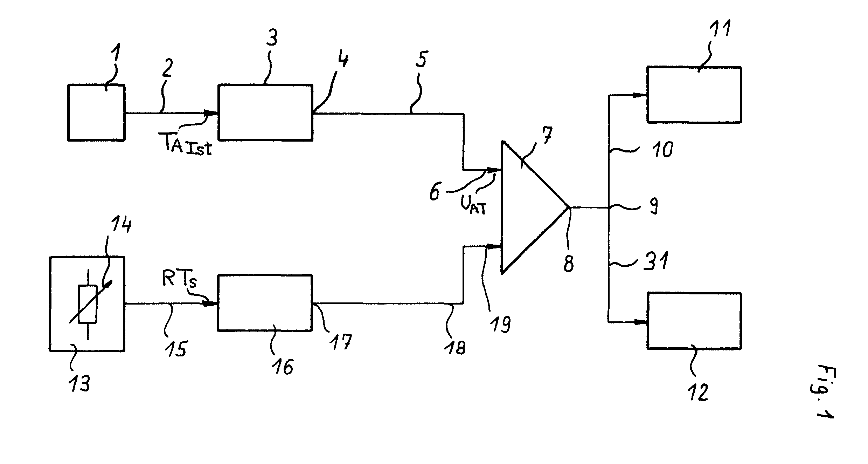

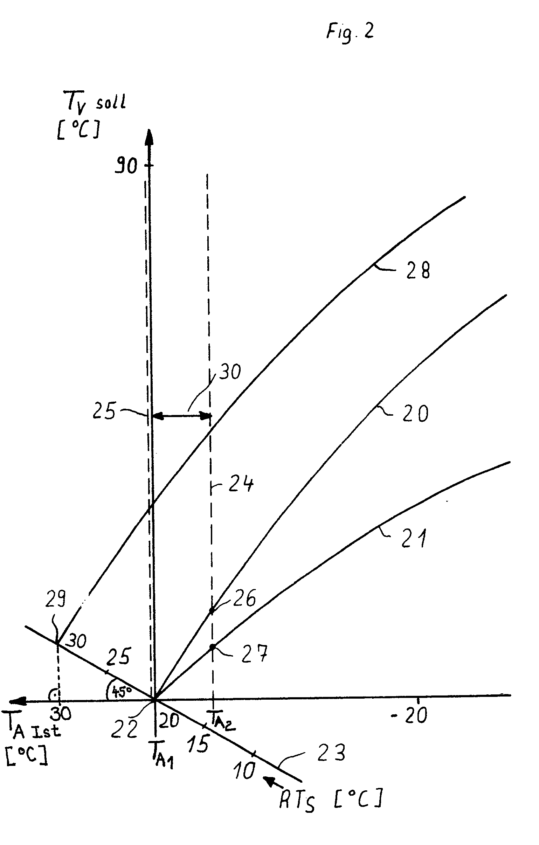

Das Diagramm der Figur zwei zeigt als Kurven 20 und 21 Heizkurven, wovon die eine Kurve 21 wesentlich flacher als die – steilere – Heizkurve 20 liegt. An der Abszisse ist die Aussentemperatur $T_{A\,Ist}$ aufgetragen, und zwar in °C. Der Massstab reicht von 20° bis −20 °C. An der Ordinate ist die Vorlauftemperatur $T_{v\,Soll}$ aufgetragen, und zwar in °C, der Massstab reicht von +20° bis +90°. Die beiden 20°-Punkte von Abszisse und Ordinate fallen im Punkt 22 zusammen. Auch die Heizkurven 20 und 21 gehen durch den Punkt 22. Durch den Punkt 22 geht bei gleichem Massstab in einem Winkel von 45° eine Gerade 23, die den Raumtemperatur-Sollwert $RT_s$ bedeutet. Im Punkt 22 beträgt der Wert des Raumtemperatur-Sollwerts gleichermassen 20°. Weitere hiervon abweichende Raumtemperatur-Sollwerte sind eingetragen.

Weiterhin sind zwei zur Abszisse senkrechte Geraden 24 und 25 ersichtlich, wobei die Gerade 25 mit der Ordinate zusammenfällt. Bei Unterschreiten des Einschaltsollwertes $T_{A1}$ (entsprechend der Geraden 24) wird die Heizungsanlage eingeschaltet, bei Überschreiten $T_{A2}$ (entsprechend der Geraden 25) durch den Aussentemperatur-Istwert $T_{A\,Ist}$ wird die Heizung ausgeschaltet. Ausschalten der Heizungsanlage geschieht durch Stromlosmachen des Ausgangs 8 des Komparators 7.

Die eben beschriebene Steuerung weist folgende Funktion auf: Der Aussentemperaturfühler 1 gibt den aktuellen Aussentemperatur-Istwert $T_{A\,Ist}$ über die Leitung 2 auf den Messwertumwandler 3, hier wird das der Aussentemperatur direkt proportionale elektrische Gleichspannungssignal $U_{AT}$ gebildet, das dem Eingang 6 des Komparators 7 zur Verfügung steht. Über den zweiten Eingang 19 wird dieses Signal mit dem Raumtemperatur-Sollwert $RT_s$ verglichen, der vom Benutzer der Steuerung durch Variation der Stellung der Handhabe 14 eingestellt werden kann. Die Variation bewirkt ein Abfahren entlang der Geraden 23. Der Raumtemperatur-Sollwertgeber ist in der Regel ein Potentiometer, das von einer Fremdspannung gespeist ist. So steht nach Umwandlung über den Messwertumwandler 16 ein mit der gewählten Raumtemperatur proportional variables Spannungssignal am Eingang 19 des Komparators 7. Es werden demgemäss am Komparator 7 ein Istwert und ein Sollwert miteinander verglichen.

Die Heizungsanlage ist in Betrieb, solange der Aussentemperatur-Istwert $T_{A \text{ Ist}}$ beziehungsweise die ihm entsprechende Spannung UAT kleiner ist als der am Sollwertgeber 13 für die Raumtemperatur eingestellte Wert $RT_s$ beziehungsweise die hieraus resultierende Spannung. Der Komparator 7 ist gekippt, am Ausgang 8 steht Spannung an, die Relais 11 und 12 liegen an Spannung, Brenner und Umwälzpumpe laufen. Unabhängig von der hier beschriebenen Steuerung findet eine weitere Steuerung statt, die hier nicht weiter beschrieben ist, und zwar wird die Vorlauftemperatur $T_{v \text{ Soll}}$ in Abhängigkeit von der Aussentemperatur in Form einer der Heizkurven 20 und 21 gesteuert. Steigt jetzt die Aussentemperatur an aufgrund wärmer werdender Witterung, so wird beim Abfahren entlang einer der eingestellten Heizkurven der Punkt 22 bei Temperaturgleichheit $(T_A = T_{A2})$ erreicht. Hier ist die am Sollwertgeber 13 eingestellte Raumtemperatur, d.h. deren Sollwert $RT_s$, gleich dem Wert $T_{A2}$ der Aussentemperatur $T_{A \text{ Ist}}$ und gleich dem Sollwert $T_{V \text{ Soll}}$ der Vorlauftemperatur. Der Komparator 7 kippt, Brenner und Umwälzpumpe der Heizungsanlage sind stromlos. Fällt von diesem Betriebszustand gesehen die Aussentemperatur $T_{A \text{ Ist}}$ wieder ab (Sonnenuntergang), so registriert der Aussentemperaturfühler 1 diesen fallenden Messwert. Nach Vergleich mit dem Einschaltsollwert $T_{A1}$ entsprechend der Geraden 24 bringt der Aussentemperaturfühler die Heizungsanlage wieder zum Einschalten.

Je nach der eingestellten Heizkurve springt die Steuerung auf einen Heizkurvenwert, bei eingeschalteter Heizkurve 20 also beispielsweise auf den Punkt 26. Wäre die Heizungskurve 21 eingestellt gewesen, würde im Punkt 27 die Anlage wieder in Betrieb gehen. Heizkurvenwerte zwischen den Geraden 25 und 24 bleiben für den Einschaltvorgang unterdrückt.

Zur weiteren Verdeutlichung der Erfindung sei jetzt angenommen, dass ausgehend vom Betriebszustand der Heizungsanlage der Raumtemperatur-Sollwert $RT_s$ durch Manipulation an der Handhabe 14 auf einen Extremwert von 30° verstellt worden wäre. Das führt automatisch dazu, dass die Steuerung entlang der Heizkurve 28 fährt. Wird weiter davon ausgegangen, dass die Aussentemperatur steigt, so bewegt sich die Steuerung auf der Heizkurve 28 in Richtung auf die Ordinate. Die Vorlauftemperatur wird immer niedriger, bis im Punkt 29 die Heizkurve 28 die Gerade 23 schneidet. Ab diesem Punkt ist eine Wärmeabgabe an den Raum nicht mehr möglich.

Da erfindungsgemäss der Schaltsollwert – das ist sowohl der Abschaltsollwert $T_{A2}$ als auch der Einschaltsollwert $T_{A1}$ gemäss der Lage der Geraden 25 bzw. 24 – bestimmt ist aus einer Differenz zwischen dem Raumtemperatur-Sollwert $RT_s$ und dem Aussentemperatur-Istwert $T_{A \text{ Ist}}$, bedeutet das, dass durch eine Verschiebung des Raumtemperatur-Sollwerts von 20 °C nach 30 °C die Gerade 25 nicht mehr durch den Punkt $T_{A2} = 20°$ der Aussentemperatur geht, sondern nunmehr durch den Punkt $T_{A2} = 30°$ entsprechend dem Lot durch den Punkt 29. Da die Geraden 24 und 25 in einem konstanten, aber einstellbaren Abstand zueinander liegen, bedeutet das, dass die Gerade 24 entsprechend weiter nach links gerückt ist, so dass der Abstand 30 nach wie vor zwischen beiden Geraden vorhanden ist. Das bedeutet, dass erst bei einer Aussentemperatur von beispielsweise 25° – wenn sie unterschritten wird – die Heizungsanlage wieder in Betrieb geht. Wesentlich für die Erfindung ist demgemäss, dass bei einer Variation des Raumtemperatur-Sollwerts gleichermassen eine Variation des Ab- und Einschaltpunkts der Heizungsanlage erfolgt, die demgemäss dann nur noch aussentemperaturabhängig ist.

**Patentanspruch**

Steuerung einer Heizungsanlage mit einer von einem Gas- oder Ölbrenner beheizten Wärmequelle, einem daran angeschlossenen Wärmetauscher und einer Heizungsumwälzpumpe, wobei die Steuerung einen Messfühler (1) für die Aussentemperatur ($T_{A \text{ Ist}}$), einen Sollwertsteller (13) für die Raumtemperatur, eine Heizkurvensteuerung, bei der der Sollwert ($T_{v \text{ Soll}}$) einer Vorlauftemperatur in Abhängigkeit von der Aussentemperatur ($T_{A \text{ Ist}}$) vorgegeben ist, und einen Vergleicher (7) zum Bestimmen des Abschaltsollwertes ($T_{A1}$) und des Einschaltsollwertes $T_{A2}$ für die Wärmequelle aufweist, dadurch gekennzeichnet, dass der Aussentemperaturmessfühler (1) über einen proportionalen Messwertumwandler (3) mit dem einen Eingang (6) des Vergleichers (7) verbunden ist, dass der Sollwertsteller (13) für die Raumtemperatur über einen weiteren Messwertumwandler (16) mit dem weiteren Eingang (19) des Vergleichers (7) verbunden ist, dass der Ausgang (8) des Vergleichers (7) mit einem Relais (11) zur Steuerung des Elektromotors der Heizungsumwälzpumpe und mit einem Relais (12) zur Steuerung eines Magnetventils des Gas- oder Ölbrenners verbunden ist, dass im Vergleicher (7) die Differenz zwischen dem Raumtemperatur-Sollwert ($RT_s$) und dem Aussentemperatur-Istwert ($T_{A \text{ Ist}}$) gebildet wird und dass die Wirkung des Vergleichers derart ist, dass, wenn der Aussentemperatur-Istwert ($T_{A \text{ Ist}}$) den den Abschaltsollwert ($T_{A2}$) bildenden Raumtemperatur-Sollwert ($RT_s$) überschreitet, die Heizungsumwälzpumpe und der Brenner abgeschaltet werden und dass, wenn der Aussentemperatur-Istwert ($T_{A \text{ Ist}}$) den um eine gegenüber dem Abschaltsollwert ($T_{A2}$) einstellbare Temperaturdifferenz niedrigeren Einschaltsollwert ($T_{A1}$) unterschreitet, die Heizungsumwälzpumpe und der Brenner eingeschaltet werden.

## Claim

A controll system of a heating system comprising a heat source which is heated by a gas or oil burner, a heat exchanger connected to the heat source, and a heating system circulation pump, which control system comprises a sensor (1) for measuring the outdoor temperature ($T_{A\,Ist}$), a set point adjuster (13) for the room temperature, a heating curve controller, in which the desired flow temperature ($T_{V\,Soll}$) is set in dependence on the outdoor temperature ($T_{A\,Ist}$), and a comparator (7) for determinig the turn-off set point ($T_{A1}$) and the turn-on set point ($T_{A2}$) for the heat source, characterized in that the sensor (1) for measuring the outdoor temperature is connected by a proportional measured-value converter (3) to the one input (6) of the comparator (7), the set point adjuster (13) for the room temperature is connected by a further measured-value converter (16) to the further input (19) of the comparator (7), the output (8) of the comparator (7) is connected to a relay (11) for controlling the electric motor of the heating system circulation pump and to a relay (12) for controlling a solenoid valve of the gas or oil burner, the difference between the desired room temperature ($RT_s$) and the actual value of the outdoor temperature ($T_{A\,Ist}$) is determined in the comparator (7), and the comparator acts to turn off the heating system circulation pump and the burner when the actual outdoor temperature ($T_{A\,Ist}$) exceeds the desired room temperature ($RT_s$), which constitutes the turn-off set point ($T_{A2}$), and to turn on the heating system circulation pump and the burner when the actual outdoor temperature ($T_{A1}$) is lower than the turn-on set point ($T_{A1}$) by a temperature difference which is adjustable relative to the turn-off set point ($T_{A2}$).

## Revendication

Dispositif régulateur d'une installation de chauffage comprenant une source de chaleur chauffée par un brûleur à gaz ou à mazout, un échangeur de chaleur en aval et une pompe de circulation, le dispositif régulateur comportant une sonde thermométrique (1) mesurant la température extérieure ($T_{A\,eff}$), un générateur de signaux de consigne (13) pour la température intérieure, une régulation par caractéristique de chauffage déterminant la consigne ($T_{V\,cons}$) d'une température d'alimentation en fonction de la température extérieure ($T_{A\,eff}$), et un comparateur (7) fixant la consigne d'arrêt ($T_{A1}$) et la consigne de mise en marche ($T_{A2}$) de la source de chaleur, caractérisé par le fait que la sonde thermométrique (1) est reliée par un transducteur de mesure proportionnel (3) à une entrée (6) du comparateur (7), que le générateur de signaux de consigne (13) pour la température intérieure est relié par un autre transducteur de mesure (16) à l'autre entrée (19) du comparateur (7), que la sortie (8) du comparateur (7) est reliée à un relais (11) commandant l'électro-moteur de la pompe de circulation, et à un relais (12) agissant sur une électrovalve du brûleur à gaz ou à mazout, que le comparateur (7) forme la différence entre la consigne de température intérieure ($RT_s$) et la température extérieure effective ($T_{A\,eff}$), et que le comparateur a pour effet que si la température extérieure effective ($T_{A\,eff}$) dépasse la consigne de température intérieure ($RT_s$) qui constitue la consigne d'arrêt ($T_{A2}$), la pompe de circulation et le brûleur sont arrêtés, et que si la température extérieure effective ($T_{A\,eff}$) est inférieure à la consigne de mise en marche ($T_{A1}$) inférieure, elle, d'une valeur réglable à la consigne d'arrêt ($T_{A2}$), la pompe de circulation et le brûleur sont mis en marche.

Fig. 1

$U_{AT}$

$TA_{Ist}$

$RT_S$

Fig. 2